# EUROPEAN PATENT SPECIFICATION

(11) **EP 1 609 365 B1**
(45) Date of publication and mention of the grant of the patent: **21.01.2009**
(21) Application number: 05105615.8
(22) Date of filing: 23.06.2005
(51) Int. Cl.: A22B 3/00

(54) **Plant and method for the stunning and slaughter of animals for slaughter through asphyxiation**
Anlage und Verfahren zum Betäuben und Schlachten von Schlachttieren durch Erstickung
Installation et procédé pour étourdir et abattre des animaux de boucherie par asphyxie

(30) Priority: 25.06.2004 IT BS20040075
(43) Date of publication of application: 28.12.2005
(73) Proprietor: Cattaruzzi International S.r.l., 25010 San Zeno naviglio(Brescia) (IT)
(72) Inventor: Cattaruzzi, Bruno, 25121, BRESCIA (IT)
(74) Representative: Crippa, Paolo Ernesto

(56) References cited:
- DE-U1- 8 701 791
- NL-A- 9 201 430
- US-A- 2 588 770
- US-A- 3 548 447
- US-A1- 2003 154 976

## Description

This invention refers to a plant and method for the stunning or slaughtering of farmyard animals such as chickens, turkeys, ducks, geese, pheasants, and rabbits destined for slaughter.

The methods currently used to stun and/or slaughter animals for slaughter include electrocution, shooting, electronarcosis, concussion and exposure to carbon dioxide.

An example of gas use to stun or slaughter poultry is described in patent no. EP 0 680 259 B1. This system, although advantageous for its efficiency and ability to reduce the damage which birds sometimes incur by flapping their wings, also has some inconveniences:
- the presence of dangerous gas storage plants in or around the slaughterhouse;
- the high construction cost of such plants, which makes their utilisation difficult for small and medium sized companies;
- the need to take considerable precautions in following a breakdown of the gas plant, due to the impossibility of immediate intervention inside the gas chamber;
- difficulty in correct calculation of the quantity of gas to pump into the gas chamber in proportion to the animals' weight.

From DE 87 01 791 U1 it is known a plant for stunning and/or slaughter of pigs. Comprising a hermetically sealable chamber with apertures for the introduction of live animals and removal of stunned or slaughtered animals, closure devices to hermetically seal such apertures, and extraction means to remove air from the chamber.

NL-A-9 201 430 discloses a plant for stunning animals, comprising means for introducing a gas suitable for stunning or slaughtering the animals in a sealed chamber, after a vacuum has been created in it.

The aim of the present invention is to supply a stunning and slaughtering method with the advantageous characteristics of the systems utilising gas but with none of the above-mentioned defects.

This aim is achieved with a plant in accordance with claim 1 and a method in accordance with claim 22.

The characteristics and advantages of the plant of the invention will be more easily understood from the description below of its preferred embodiments, in conjunction with the appended indicative and non-limiting drawings, in which:

figure 1 gives a schematic view from the top of the plant in an initial layout;

figure 2 shows the plant from the side;

figure 3 gives a schematic view from the top of the plant in a second layout;

figure 4 shows the plant from the side;

figure 5 gives a schematic view from the top of the plant in a third layout;

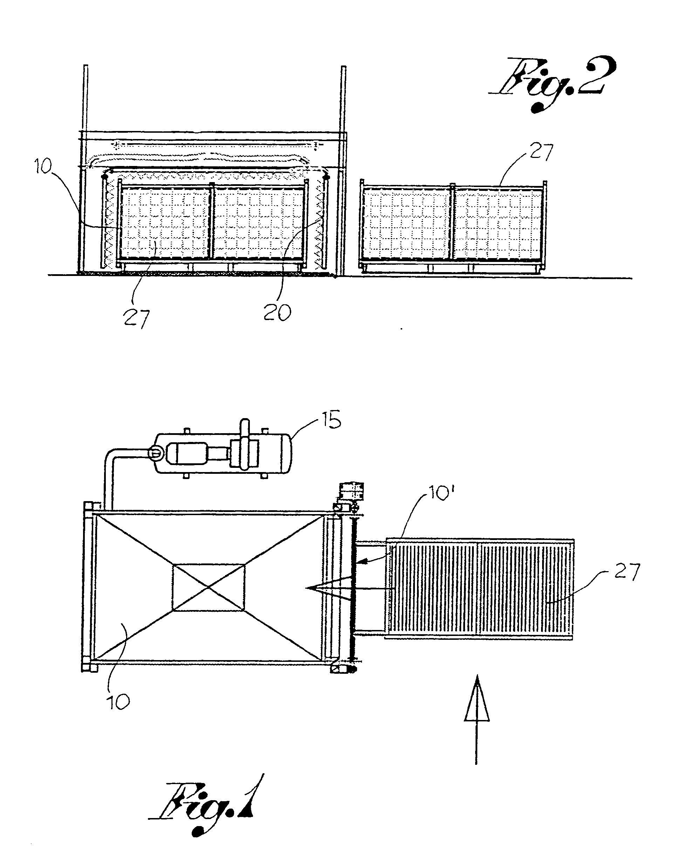

figure 2 shows the plant from the side;

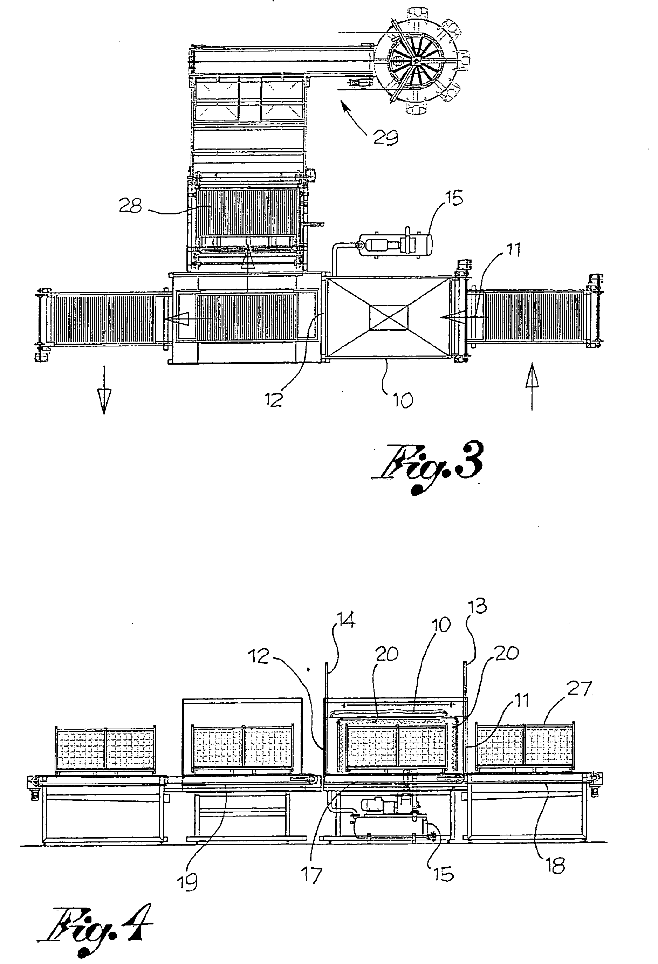

figure 3 gives a schematic view from the top of the plant in a second layout;

figure 4 shows the plant from the side;

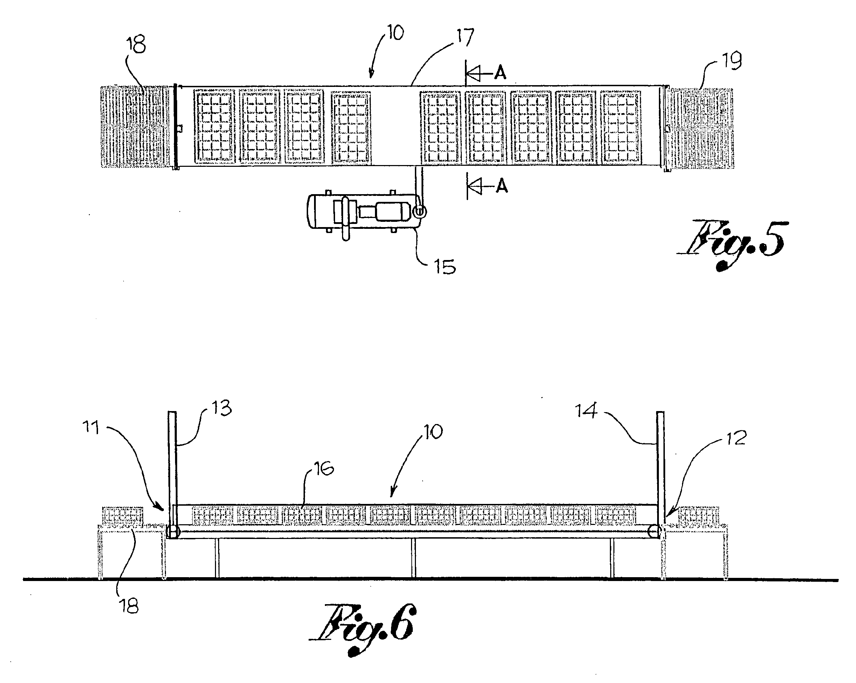

figure 5 gives a schematic view from the top of the plant in a third layout;

figure 6 shows the plant in figure 5 from the side;

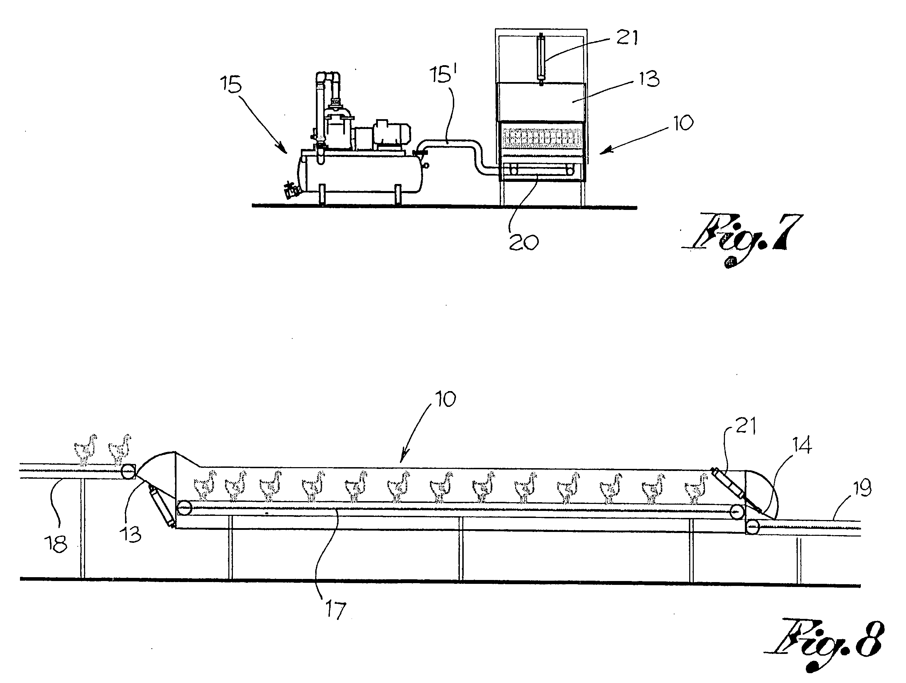

figure 7 shows a cross section of the plant across the line A-A in figure 5;

figure 8 gives a view from the sides of the various plant layouts in figures 5-7;

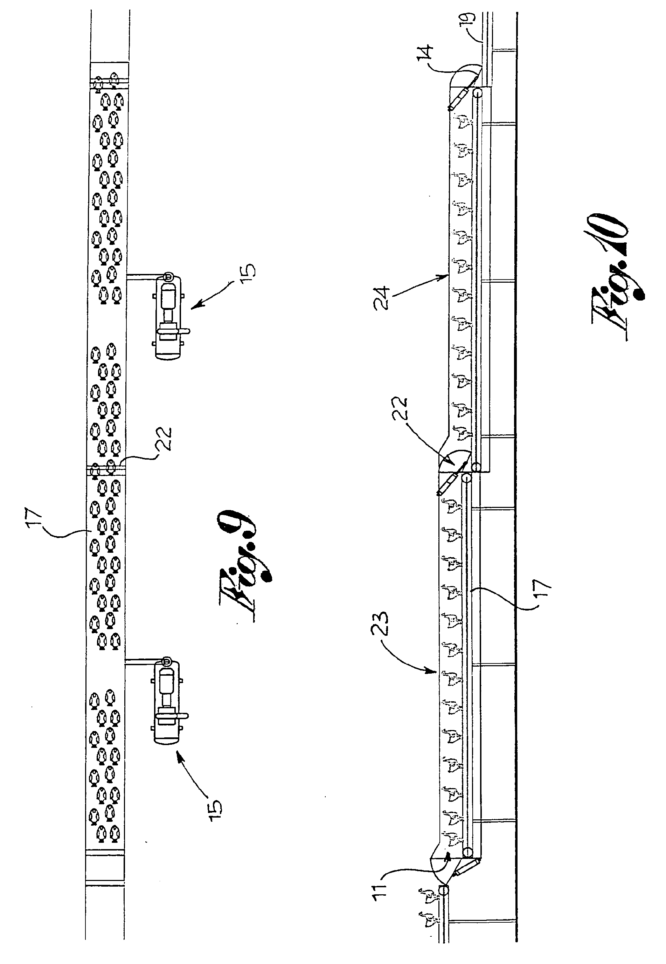

figure 9 gives a schematic view from the top of the plant of a fourth layout;

figure 10 shows the plant in figure 9 from the side;

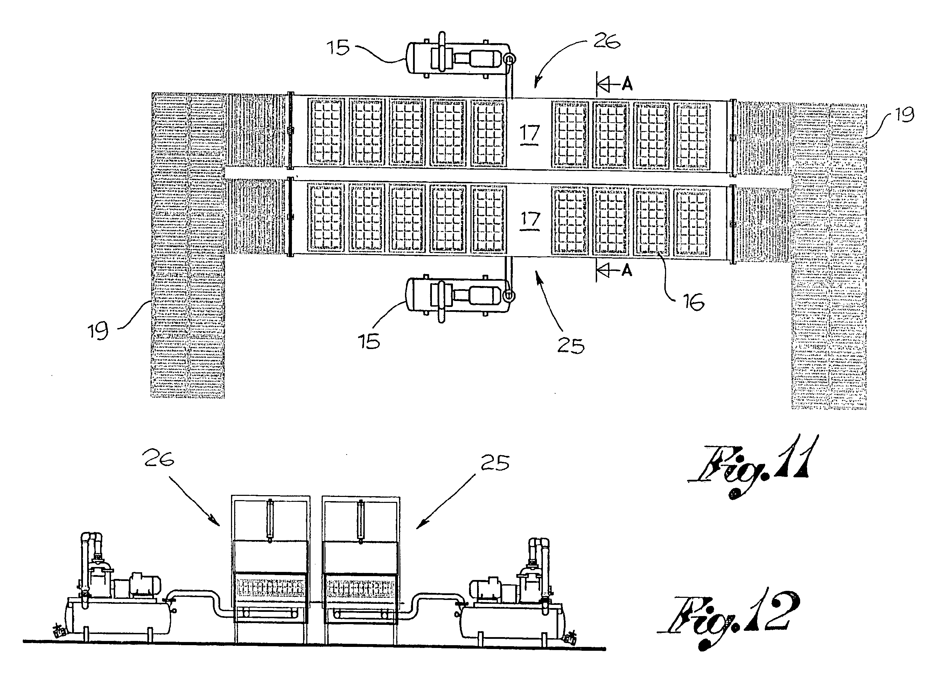

figure 11 gives a schematic view from the top of the plant of a final layout;

figure 12 shows a cross section of the plant across the line A-A in figure 11; and

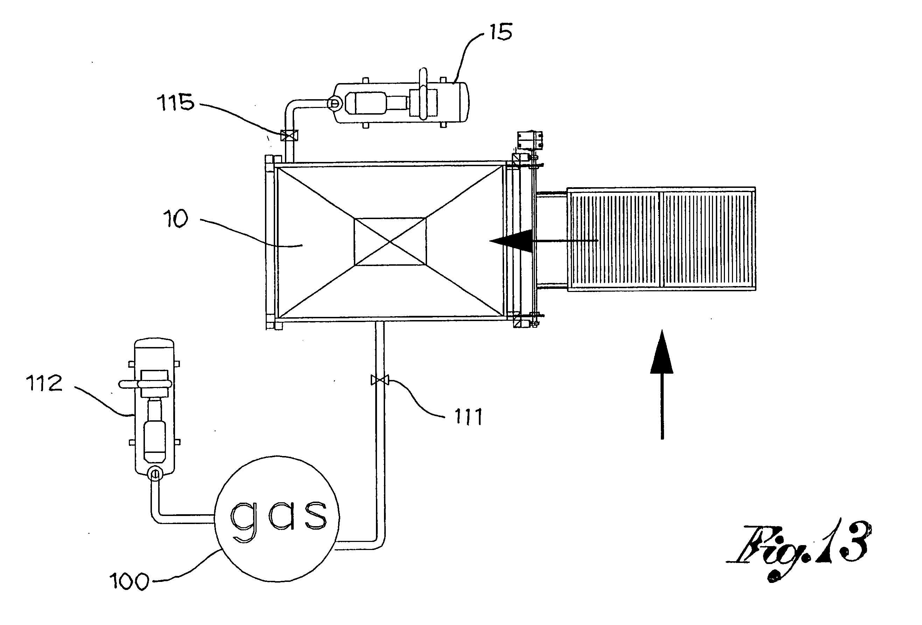

figure 13 shows a view of the plant from above in yet another embodiment.

In its general layout, as illustrated in figures 1 and 2, the stunning and/or slaughter plant for animals for slaughter described in this invention comprises a hermetically sealable chamber 10 with at least one aperture 10' for introduction of live animals and removal of stunned or slaughtered animals, devices for hermetic sealing of said aperture/s, and an extraction means 15 communicating with and extracting air from said chamber in order to stun or slaughter the animals.

Preferably, the chamber 10 has an entrance aperture 11 for introduction of live animals and an exit aperture 12 for removal of stunned or slaughtered animals, each aperture having its respective closure device 13, 14.

In this case, the bottom of the hermetically sealable chamber 10 ideally consists of a motorised conveyor 17 capable of transporting the animals from entrance 11 to exit 12. This allows the simultaneous loading of live animals into and removal of stunned or slaughtered animals from the chamber 10.

The animals may be introduced into the plant enclosed in a single large pen 27, or in a succession of smaller pens 16, or loose.

Where animal movement is in a line of pens 16 or loose, the hermetically sealable chamber is in the form of a tunnel.

Advantageously, in order to automate the phases of animal loading into the chamber 10, stunning and/or slaughter and removal, the live animals are transported from a loading zone (not shown) to the hermetically sealable chamber entrance aperture 12 by a motorised entrance conveyor 18. In the same way, the stunned or slaughtered animals are transported to the exit aperture 12 by a motorised exit conveyor 19.

Where the single large pen 27 is utilised, it can be simply inserted and removed from the chamber 10 with a lift truck.

In the layout shown in figures 1-4, for example, the hermetically sealable chamber 10 is designed to hold one or more large pens 27 simultaneously. In figures 3 and 4, the large pens 27 are introduced into the chamber by a motorised entrance conveyor 18 and removed by the motorised exit conveyor 19. Once removed, each large pen 27 is activated to turn on its side to unload the slaughtered animals onto a third motorised conveyor 28 serving a hanging line 29.

In accordance with the preferred layout, numerous perforated pipelines 20 connected to the extraction means 15 are positioned inside the hermetically sealable chamber 10. These perforated pipelines 20 run along the entire hermetically sealable chamber 10 and are distributed along its floor, side walls and ceiling.

The extraction means 15 comprises, for example, an electric pump connected to the perforated pipelines by a duct 15'.

In the layout shown in figures 1-7, the aperture closure devices 13 and 14 are in the form of a rolling shutter.

Alternatively, as shown in figures 8-10, the closure devices 13 and 14 may be in the form of pivoting plates which can be activated to rotate between a raised position, or closure of apertures 11 and 12, and a lowered position, or opening of the connection between the motorised conveyors 18, 17, 19. The latter may be, for example, belt conveyors. In this case, to facilitate animal throughput, especially where they are introduced loose into the plant, the motorised entrance 18 and exit 19 conveyors are positioned respectively above and below the motorised conveyor 17 of the sealable chamber 10 (figure 8).

As another alternative, the entrance and exit closure devices may be of a revolving door type, allowing a continuous throughput of animals through the hermetically sealable chamber 10.

In any case, the closure devices 13, 14 are ideally actioned using electric, pneumatic or hydraulic commands 21.

The animal stunning and/or slaughter method using the above described plant thus involves the introduction of the animals into the sealable chamber 10, closure of the entrance and exit apertures and activation of the extraction means to create a vacuum within the chamber 10. Tests effected have demonstrated that a vacuum of 60 mm Hg maintained for 120 seconds will cause the death of the animals, which can then be immediately sent to the hanging area for the subsequent throat-cutting and blood draining phases. Ideally, while the stunned or slaughtered animals are being removed from the sealable chamber 10, other live animals are simultaneously introduced into the chamber.

If required by the overall abattoir capacity, i.e. if its hourly production requires a number of animals greater than that exiting the stunning/slaughter plant, to avoid dead time due to the animals' stay in the sealable chamber under vacuum conditions for the preestablished time, the stunning/slaughter plant can be set up in such a way as to optimise loading, air extraction from the hermetically sealable chamber and removal, in order to achieve the greatest possible throughput of animals to the hanging zone.

Specifically, if N is the number of animals that the processing line after the stunning/slaughtering plant is able to process in one unit of time, and T is the time necessary to stun/slaughter the animals, to enable the continuous operation of the processing line without interruption the sealable chamber must be big enough to contain at least N*T animals (ignoring for the sake of simplicity the time needed to transfer the stunned or slaughtered animals exiting the sealable chamber to the hanging line).

In this way, there will always be stunned or slaughtered animals ready to be supplied to the hanging line.

Nevertheless, in contrast to the plants utilised to date, the need to hermetically seal the chamber from which air is extracted means that continuous throughput of animals from the entrance to the exit of the stunning/slaughter by asphyxiation plant is not possible. Even in the above cited case, in which the capacity of the stunning/slaughter plant allows the hanging line to be re-supplied without interruptions, there is the inconvenience that the newly stunned or slaughtered animals are not immediately hung on the processing line but wait for a time up to the time T necessary for stunning/slaughter. This situation may not be acceptable for correct animal processing, which requires the shortest time possible between the animal's death and its throat-cutting and blood-draining.

The set-up solutions to avoid this problem employ a number of hermetically sealable chambers serving the same hanging line, each one with a capacity lower than the N*T capacity defined above. These chambers can be activated independently with a temporal sequence dependent on their number and capacity. Increasing the number of hermetically sealable chambers reduces the maximum waiting time for animals to be hung on the processing line.

For example, again referring to the T and N values defined above, using two chambers each with capacity T*N/2 animals, the second chamber can be activated at T/2 time after the first is activated. The maximum waiting time for animals exiting the chamber is thus reduced from T to T/2.

In the layout shown in figures 9 and 10, the hermetically sealable chamber 10 is supplied with at least one intermediate closure device 22 suitable for dividing at least two compartments 23, 24, connected in cascade and hermetically separable from one another.

It is thus possible to introduce the first group of animals into the first compartment 23, close all the closure devices 13, 14 and 22 and activate the extraction means 15. After time T' less than that necessary to stun or slaughter the animals, the intermediate closure device 22 is opened so that the first group of animals can be transferred to the second compartment 24. The intermediate closure device 22 is then re-closed and the entrance aperture 11 opened. A second group of animals can now be introduced into the first compartment 23 and the entrance aperture 11 closed; while the second group remains in the first compartment for time T', the exit aperture 12 can be opened and the first group of stunned or killed animals removed. The cycle is repeated from the closure device 22 opening phase.

Such a plant allows the exit motorised conveyor 19 to be re-supplied at time intervals T' shorter than the time T necessary for the animals' stunning or death. Obviously, increasing the number of compartments in cascade allows ever shorter waiting times to be achieved for animals exiting the stunning/slaughter plant.

A further variant on the layout is shown in figures 11 and 12, where the hermetically sealable chamber comprises at least two compartments 25, 26 positioned in parallel, that is with each one connected to its own extraction means 15 and having its own entrance and exit apertures with their respective closure devices.

Construction of the chamber 10 with parallel compartments allows phase initiation of successive compartments to be delayed with respect to the first, thus supplying the most continuous possible throughput of stunned or slaughtered animals to the plant exit.

In figure 13 is represented, in a general embodiment equivalent to that of figures 1 and 2, a further variation of the plant suitable for slaughtering or stunning animals even more quickly and with less stress.

It has in fact been found that, after creating a vacuum in chamber 10, if a specific quantity of gas is introduced into the chamber, for example carbon dioxide, the animals, by practically breathing pure gas, die sooner and with less trauma.

This variation of embodiment therefore envisages that near sealed chamber 10, besides the pump for creating vacuum 15, along the air intake pipe of which a first on-off valve 115 is provided, a tank 100 be installed containing the gas to be introduced. To the pipe connecting said tank 100 to the chamber 10 a second on-off valve 111 is associated.

Advantageously, to tank 100 is also associated a second suction pump 112. The tank 100 can be connected to a gas storage tank that supplies the tank 100 when the gas inside falls below a preset quantity.

The animal stunning and/or slaughtering cycle is thus implemented.

Once a vacuum has been created in the sealed chamber 10, the first on-off valve 115 is automatically closed and at the same time the second valve 111 is opened which connects the gas tank 100 to chamber 10.

Due to the vacuum created in the chamber, the gas expands immediately in the chamber and thus ensures that the animals breathe virtually pure gas.

Once the animals are stunned or slaughtered, the gas in the chamber is extracted back into the gas tank by the second pump 112. Alternatively, the pump 10 can be used again by fitting a specific air circuit.

In any case, all or part of the gas can be recycled for the next cycle, with considerable economic advantage.

After opening and unloading the stunned or dead animals and reintegration with new live animals, the cycle is repeated.

The extraction and vacuum time required to slaughter or stun the animals, and the quantity of gas introduced are preset and controlled by a PLC depending on the weight of the animals in the sealed chamber.

In all the embodiments described above, the plant advantageously comprises a control unit (not represented) suitable for controlling and synchronising the means of extraction, the closing devices and the motorised transporters.

The capacity of chamber 10, the speed of the transporters and their length are in any case selected according to the slaughtering capacity of the plant in order to ensure as short a time as possible between the death of the animal and throat cutting and bleeding, and in any case the continuity of slaughter line production. In other words, the number of animals in the stunning/slaughtering Plant must be the same or above the number of animals hung in the unit of time on the plant slaughtering line.

It should be noted that the described plant, besides being economically advantageous, is also safer than systems that use gas. In case of a fault, for instance, it is enough to stop the pump to reset normal environmental conditions in just a few seconds, by means of a relief valve, and safeguard the animals in the chamber and the operator in the event of the latter having to intervene.

Finally it should be noted that the plant presented here can, with suitable constructive changes, be used to slaughter or stun other slaughterhouse animals such as pigs and sheep.

## Claims

1. Plant for the stunning and/or slaughter of animals for slaughter, comprising a hermetically sealable chamber (10) with at least one aperture for the introduction of live animals and removal of stunned or slaughtered animals, closure devices (13, 14) to hermetically seal such aperture/s, and an extraction means (15) to remove air from the chamber in order to stun or slaughter the animals, **characterized in that** the hermetically sealable chamber is supplied with at least one intermediate closure device (22) suitable for dividing at least two compartments (23, 24) connected in cascade and hermetically separable from one another.

2. Plant according to claim 1, in which the hermetically sealable chamber has an entrance aperture (11) for introduction of live animals and an exit aperture (12) for removal of stunned or slaughtered animals, and in which the bottom of the hermetically sealable chamber (10) includes a motorised conveyor (17) suitable for transporting the animals from the entrance to the exit apertures.

3. Plant according to claim 2, comprising a motorised entrance conveyor (18) suitable for transporting live animals from the loading area to the hermetically sealable chamber (10).

4. Plant according to claim 2 or 3, comprising a motorised exit conveyor (19) suitable for transporting stunned or slaughtered animals from the hermetically sealable chamber to the unloading area.

5. Plant according to any of the previous claims, in which a number of perforated pipelines (20) are positioned inside the hermetically sealable chamber and connected to the extraction means (15).

6. Plant according to any of the previous claims, in which the extraction means comprises an electric pump.

7. Plant according to any of the previous claims, in which the aperture closure devices (13, 14) are in the form of a rolling shutter.

8. Plant according to any of the previous claims, in which the aperture closure devices (13, 14) are in the form of a revolving door to allow a continuous throughput of animals through the hermetically sealable chamber.

9. Plant according to claim 3, in which the motorised entrance conveyor is higher than the motorised conveyor within the hermetically sealable chamber, and in which the entrance aperture closure device comprises a slide which can be activated to rotate between a closed position and an open position in which it connects these conveyors.

10. Plant according to claim 4, in which the motorised exit conveyor is lower than the motorised conveyor within the hermetically sealable chamber, and in which the exit aperture closure device comprises a slide which can be activated to rotate between a closed position and an open position in which it connects these conveyors.

11. Plant according to any of the previous claims, in which the closure devices are actionable by electrical, pneumatic or hydraulic actuators (21).

12. Plant according to any of the previous claims, in which the hermetically sealable chamber has the form of a tunnel.

13. Plant according to any of the previous claims, in which if N is the number of animals that the processing line after the stunning/slaughtering plant is able to process in one unit of time, and T is the time necessary to stun/slaughter the animals, the hermetically sealable chamber is sized to contain at least N*T animals.

14. Plant according to any of the claims from 1 to 13, comprising a number of hermetically sealable chambers serving a slaughterhouse processing line which can be activated independently according to a sequence such as to reduce the waiting time of the stunned or slaughtered animals exiting these chambers.

15. Plant according to any of the previous claims, including a control unit able to activate and synchronise the extraction means, the closure devices and the motorised conveyors.

16. Plant according to any of the previous claims, in which the number and capacity of the hermetically sealable chambers are determined as a function of the time necessary for the animal loading, asphyxiation and unloading phases in order to guarantee the continuity of the slaughterhouse processing line.

17. Plant according to any of the previous claims, in which the number and capacity of the hermetically sealable chambers and conveyor webs are determined such that the number of animals within the stunning/slaughter plant is equal to or greater than the number of animals hung up on the slaughterhouse processing line in one unit of time.

18. Plant according to any of the previous claims, also comprising means for introducing a gas suitable for stunning and/or slaughtering the animals in the sealed chamber, after a vacuum has been created in it.

19. Plant according to claim 18, in which said means comprise a tank (100) containing the gas linked to the sealed chamber (10), an on/off valve (111) positioned along the connection pipe between said tank and said chamber, and control means suitable for controlling the opening of said on/off valve only after a vacuum has been created in the chamber.

20. Plant according to claim 19, in which the air breathing means of the sealed chamber are connected to said chamber with the interposing of an on/off valve (115).

21. Plant according to claim 19 or 20, in which to the gas tank (100) are associated the relevant breathing means (112) suitable for extracting the gas from the sealed chamber (10) to reintroduce this into the tank (100).

22. Method of stunning and/or slaughtering slaughterhouse animals by means of a plant according to claim 1 comprising two cascade compartments separated by an intermediate closing device, comprising the steps of:
a. introducing a first group of animals into the first compartment;
b. closing all closing devices;
c. operating the extraction means;
d. after a time T' lower than the time T required to stun or slaughter the animals, opening the intermediate closing device so as to transfer the first group of animals into the second compartment;
e. closing the intermediate closing device and opening the entrance opening;
f. introducing a second group of animals in the first compartment and closing the entrance opening;
g. while the second group of animals remains in the first compartment for the time T', opening the exit opening and removal the first group of animals;
h. repeating the cycle from step d).

23. Method according to claim 22, actuated with a plant according to claim 14, in which the extraction means associated with each sealed chamber or compartment are operated in succession so as to provide a flow of stunned or dead animals as continuous as possible exiting from the plant.

24. Method according to claim 23, in which if N is the number of animals which the slaughtering line downstream of the stunning/slaughtering plant is able to cater for in the unit of time, and if T is the time required to stun/slaughter the animals, into each sealed chamber or compartment a number of animals is introduced below N*T.

25. Method according to claim 22, in which, once vacuum has been created inside the chamber, and before opening the access opening, a quantity of gas is introduced into the chamber suitable for stunning and/or slaughtering the animals.

26. Method according to claim 24, in which, after a preset time lapse, said gas is again extracted into the tank (100) to be used again.

## Patentansprüche

1. Anlage für die Betäubung und/oder Tötung von Schlachttieren, umfassend eine hermetisch abdichtbare Kammer (10) mit mindestens einer Öffnung zum Einführen von lebenden Tieren und Abführen von betäubten oder getöteten Tieren, Schließvorrichtungen (13, 14) zum hermetischen Abdichten einer solchen Öffnung bzw. solcher Öffnungen, und ein Entnahmemittel (15) zum Entfernen von Luft aus der Kammer, um die Tiere zu betäuben oder zu töten, **dadurch gekennzeichnet, dass** die hermetisch abdichtbare Kammer mit mindestens einer Zwischenschließvorrichtung (22) versehen ist, die dazu geeignet ist, mindestens zwei Abteile (23, 24) abzutrennen, die kaskadenartig und hermetisch voneinander trennbar verbunden sind.

2. Anlage nach Anspruch 1, bei der die hermetisch abdichtbare Kammer eine Eingangsöffnung (11) zum Einführen von lebenden Tieren und eine Ausgangsöffnung (12) zum Abführen von betäubten oder getöteten Tieren aufweist, und bei welcher der Boden der hermetisch abdichtbaren Kammer (10) einen motorisierten Förderer (17) umfasst, der dazu geeignet ist, die Tiere vom Eingang zu den Ausgangsöffnungen zu befördern.

3. Anlage nach Anspruch 2, umfassend einen motorisierten Eingangsförderer (18), der dazu geeignet ist, lebende Tiere vom Ladebereich zur hermetisch abdichtbaren Kammer (10) zu befördern.

4. Anlage nach Anspruch 2 oder 3, umfassend einen motorisierten Ausgangsförderer (19), der dazu geeignet ist, betäubte oder getötete Tiere von der hermetisch abdichtbaren Kammer zum Entladebereich zu befördern.

5. Anlage nach einem der vorherigen Ansprüche, bei der eine Anzahl perforierter Rohrleitungen (20) in der hermetisch abdichtbaren Kammer angeordnet und mit dem Entnahmemittel (15) verbunden sind.

6. Anlage nach einem der vorherigen Ansprüche, bei der das Entnahmemittel eine elektrische Pumpe umfasst.

7. Anlage nach einem der vorherigen Ansprüche, bei der die Schließvorrichtungen (13, 14) der Öffnung die Form eines Rolltores haben.

8. Anlage nach einem der vorherigen Ansprüche, bei der die Schließvorrichtungen (13, 14) der Öffnung die Form einer Drehtür haben, um einen kontinuierlichen Durchsatz von Tieren durch die hermetisch abdichtbare Kammer zu ermöglichen.

9. Anlage nach Anspruch 3, bei welcher der motorisierte Eingangsförderer höher als der motorisierte Förderer in der hermetisch abdichtbaren Kammer ist, und bei der die Schließvorrichtung der Eingangsöffnung eine Rutsche umfasst, die so betätigt werden kann, dass sie sich zwischen einer geschlossenen Stellung und einer geöffneten Stellung, in der sie diese Förderer verbindet, dreht.

10. Anlage nach Anspruch 4, bei welcher der motorisierte Ausgangsförderer niedriger als der motorisierte Förderer in der hermetisch abdichtbaren Kammer ist, und bei der die Schließvorrichtung der Ausgangsöffnung eine Rutsche umfasst, die so betätigt werden kann, dass sie sich zwischen einer geschlossenen Stellung und einer geöffneten Stellung, in der sie diese Förderer verbindet, dreht.

11. Anlage nach einem der vorherigen Ansprüche, bei der die Schließvorrichtungen durch elektrische, pneumatische oder hydraulische Aktuatoren (21) betätigt werden können.

12. Anlage nach einem der vorherigen Ansprüche, bei der die hermetisch abdichtbare Kammer die Form eines Tunnels hat.

13. Anlage nach einem der vorherigen Ansprüche, bei der, wenn N die Anzahl von Tieren ist, welche die Verarbeitungslinie nach der Betäubungs-/Tötungsanlage in einer Zeiteinheit zu verarbeiten in der Lage ist, und T die zum Betäuben/Töten der Tiere erforderliche Zeit ist, die hermetisch abdichtbare Kammer so bemessen ist, dass sie mindestens N*T Tiere fassen kann.

14. Anlage nach einem der Ansprüche von 1 bis 13, umfassend eine Anzahl hermetisch abdichtbarer Kammern, die eine Schlachthof-Verarbeitungslinie bedienen und die unabhängig nach einer Sequenz aktiviert werden können, um die Wartezeit der diese Kammern verlassenden betäubten oder getöteten Tiere zu verkürzen.

15. Anlage nach einem der vorherigen Ansprüche, umfassend eine Steuereinheit, die imstande ist, das Entnahmemittel, die Schließvorrichtungen und die motorisierten Förderer zu aktivieren und zu synchronisieren.

16. Anlage nach einem der vorherigen Ansprüche, bei der die Anzahl und das Fassungsvermögen der hermetisch abdichtbaren Kammern in Abhängigkeit von der für die Phasen zum Laden, Ersticken und Entladen der Tiere erforderlichen Zeit bestimmt werden, um die Kontinuität der Schlachthof-Verarbeitungslinie zu gewährleisten.

17. Anlage nach einem der vorherigen Ansprüche, bei der die Anzahl und das Fassungsvermögen der hermetisch abdichtbaren Kammern und der Förderbänder derart festgelegt werden, dass die Anzahl von Tieren in der Betäubungs-/Tötungsanlage gleich oder größer als die Anzahl der in einer Zeiteinheit auf der Schlachthof-Verarbeitungslinie aufgehängten Tiere ist.

18. Anlage nach einem der vorherigen Ansprüche, außerdem umfassend Mittel zum Einleiten eines Gases, das dazu geeignet ist, die Tiere in der abgedichteten Kammer zu betäuben und/oder zu töten, nachdem in ihr ein Vakuum erzeugt wurde.

19. Anlage nach Anspruch 18, bei der die genannten Mittel einen das Gas enthaltenden Tank (100), der mit der abgedichteten Kammer (10) verbunden ist, ein Schaltventil (111), das auf dem Verbindungsrohr zwischen dem genannten Tank und der genannten Kammer angeordnet ist, und ein Steuermittel umfassen, das dazu geeignet ist, das Öffnen des genannten Schaltventils erst dann zu steuern, nachdem das Vakuum in der Kammer erzeugt wurde.

20. Anlage nach Anspruch 19, bei der die Luftansaugmittel der abgedichteten Kammer unter Zwischenschaltung eines Schaltventils (115) mit der genannten Kammer verbunden sind.

21. Anlage nach Anspruch 19 oder 20, bei der mit dem Gastank (100) die entsprechenden Ansaugmittel (112) verbunden sind, die dazu geeignet sind, das Gas aus der abgedichteten Kammer (10) zu entnehmen, um dieses wieder in den Tank (100) einzuleiten.

22. Verfahren zum Betäuben und/oder Töten von Schlachthoftieren mit Hilfe einer Anlage nach Anspruch 1, die zwei durch eine Zwischenschließvorrichtung getrennte Kaskadenabteile umfasst, das die folgenden Schritte umfasst:
a. Einführen einer ersten Gruppe von Tieren in das erste Abteil;
b. Schließen aller Schließvorrichtungen;
c. Betätigen der Entnahmemittel;
d. nach einer Zeit T', die kürzer als die zum Betäuben oder Töten der Tiere erforderliche Zeit T ist, Öffnen der Zwischenschließvorrichtung, um die erste Gruppe von Tieren in das zweite Abteil zu transferieren;
e. Schließen der Zwischenschließvorrichtung und Öffnen der Eingangsöffnung;
f. Einführen einer zweiten Gruppe von Tieren in das erste Abteil und Schließen der Eingangsöffnung;
g. während die zweite Gruppe von Tieren für die Zeit T' im ersten Abteil verbleibt, Öffnen der Ausgangsöffnung und Abführen der ersten Gruppe von Tieren;
h. Wiederholen des Zyklus ab Schritt d).

23. Verfahren nach Anspruch 22, ausgeführt mit einer Anlage nach Anspruch 14, bei dem die mit jeder abgedichteten Kammer oder jedem abgedichteten Abteil verbundenen Entnahmemittel in Folge betätigt werden, um einen möglichst stetigen Fluss die Anlage verlassender betäubter oder toter Tiere bereitzustellen.

24. Verfahren nach Anspruch 23, bei dem, wenn N die Anzahl von Tieren ist, welche die Schlachtlinie nach der Betäubungs-/Tötungsanlage in einer Zeiteinheit versorgen kann, und wenn T die zum Betäuben/Töten der Tiere erforderliche Zeit ist, in jede abgedichtete Kammer oder jedes abgedichtete Abteil eine Anzahl von Tieren eingeführt wird, die kleiner N*T ist.

25. Verfahren nach Anspruch 22, bei dem, nachdem das Vakuum in der Kammer erzeugt wurde und bevor die Zugangsöffnung geöffnet wird, eine Gasmenge in die Kammer eingeleitet wird, die dazu geeignet ist, die Tiere zu betäuben und/oder zu töten.

26. Verfahren nach Anspruch 24, bei dem nach einem voreingestellten Zeitraum das genannte Gas wieder in den Tank (100) abgezogen wird, um erneut verwendet zu werden.

## Revendications

1. Installation pour l'étourdissement et/ou l'abattage des animaux de boucherie, comprenant une chambre à fermeture hermétique (10), disposant d'au moins une ouverture pour l'introduction des animaux sur pied et l'enlèvement des animaux étourdis ou abattus, des dispositifs de fermeture (13, 14) pour fermer hermétiquement cette ou ces ouverture(s), et des systèmes d'extraction (15) pour évacuer l'air de la chambre dans le but d'étourdir ou abattre les animaux, **caractérisée en ce que** la chambre à fermeture hermétique est dotée d'au moins un dispositif d'obturation intermédiaire (22) permettant de séparer au moins deux compartiments (23, 24) connectés en cascade et hermétiquement séparables l'un de l'autre.

2. Installation selon la revendication 1, dans laquelle la chambre à fermeture hermétique possède une ouverture d'entrée (11) pour l'introduction des animaux sur pied et une ouverture de sortie (12) pour l'enlèvement des animaux étourdis ou abattus, et dans laquelle la partie inférieure de la chambre à fermeture hermétique (10) inclut un convoyeur motorisé (17) permettant de transporter les animaux depuis l'ouverture d'entrée jusqu'à l'ouverture de sortie.

3. Installation selon la revendication 2, comprenant un convoyeur motorisé d'entrée (18) permettant de transporter les animaux sur pied depuis la zone de chargement jusqu'à la chambre à fermeture hermétique (10).

4. Installation selon la revendication 2 ou 3, comprenant un convoyeur motorisé de sortie (19) permettant de transporter les animaux étourdis ou abattus de la chambre à fermeture hermétique jusqu'à la zone de déchargement.

5. Installation selon l'une quelconque des revendications précédentes, dans laquelle un certain nombre de conduites perforées (20) sont positionnées à l'intérieur de la chambre à fermeture hermétique et raccordées aux systèmes d'extraction (15).

6. Installation selon l'une quelconque des revendications précédentes, dans laquelle les systèmes d'extraction comprennent une électropompe.

7. Installation selon l'une quelconque des revendications précédentes, dans laquelle les dispositifs de fermeture de l'ouverture (13, 14) se présentent sous la forme d'un volet roulant.

8. Installation selon l'une quelconque des revendications précédentes, dans laquelle les dispositifs de fermeture de l'ouverture (13, 14) se présentent sous la forme d'une porte à tambour qui permet le passage continu des animaux traversant la chambre à fermeture hermétique.

9. Installation selon la revendication 3, dans laquelle le convoyeur motorisé d'entrée est plus haut que le convoyeur motorisé se trouvant dans la chambre à fermeture hermétique, et dans laquelle le dispositif de fermeture de l'ouverture d'entrée comprend une glissière qui peut d'être actionnée de manière à pivoter d'une position fermée à une position ouverte permettant de relier ces convoyeurs.

10. Installation selon la revendication 4, dans laquelle le convoyeur motorisé de sortie est plus bas que le convoyeur motorisé se trouvant dans la chambre à fermeture hermétique, et dans laquelle le dispositif de fermeture de l'ouverture d'entrée comprend une glissière qui peut d'être actionnée de manière à pivoter d'une position fermée à une position ouverte permettant de relier ces convoyeurs.

11. Installation selon l'une quelconque des revendications précédentes, dans laquelle les dispositifs de fermeture peuvent être déclenchés au moyen d'actionneurs électriques, pneumatiques ou hydrauliques.

12. Installation selon l'une quelconque des revendications précédentes, dans laquelle la chambre à fermeture hermétique a la forme d'un tunnel.

13. Installation selon l'une quelconque des revendications précédentes, dans laquelle si N représente le nombre d'animaux que la chaîne de traitement située après l'installation d'étourdissement ou d'abattage est en mesure de traiter au cours d'une unité de temps, et si T représente le temps nécessaire pour étourdir ou abattre les animaux, la chambre à fermeture hermétique est alors dimensionnée pour contenir au moins N*T animaux.

14. Installation selon l'une quelconque des revendications 1 à 13, comprenant un certain nombre de chambres à fermeture hermétique alimentant une chaîne d'abattage susceptible d'être actionnée de manière autonome en fonction d'une certaine séquence, de manière à réduire le temps d'attente des animaux étourdis ou abattus sortant de ces chambres.

15. Installation selon l'une quelconque des revendications précédentes, incluant un boîtier de commande permettant d'actionner et de synchroniser les systèmes d'extraction, les dispositifs de fermeture et les convoyeurs motorisés.

16. Installation selon l'une quelconque des revendications précédentes, dans laquelle le nombre et la capacité des chambres à fermeture hermétique sont déterminés en fonction du temps nécessaire aux phases de chargement, d'asphyxie et de déchargement des animaux, de manière à assurer la continuité de la chaîne d'abattage.

17. Installation selon l'une quelconque des revendications précédentes, dans laquelle le nombre et la capacité des chambres à fermeture hermétique et des bandes du convoyeur sont déterminés de façon à ce que le nombre d'animaux à l'intérieur de l'installation d'étourdissement ou d'abattage soit supérieur ou égal au nombre d'animaux suspendus sur la chaîne d'abattage au cours d'une unité de temps donnée.

18. Installation selon l'une quelconque des revendications précédentes, comprenant également des dispositifs pour l'introduction d'un gaz permettant d'étourdir ou d'abattre les animaux dans la chambre hermétique, après que le vide ait été créé dans celle-ci.

19. Installation selon la revendication 18, dans laquelle ces dispositifs comprennent un réservoir (100) contenant le gaz associé à la chambre hermétique (10), une vanne tout ou rien (111) positionnée le long du tube de raccordement entre le réservoir et la chambre, ainsi que des système de commande permettant de contrôler que l'ouverture de la vanne tout ou rien n'ait lieu que lorsque le vide a été créé dans la chambre.

20. Installation selon la revendication 19, dans laquelle les dispositifs d'admission de l'air respirable de la chambre hermétique sont reliés à cette chambre par l'entremise d'une vanne tout ou rien (115).

21. Installation selon la revendication 19 ou 20, dans laquelle les dispositifs afférents d'admission de l'air (112), permettant d'évacuer le gaz de la chambre hermétique (10) pour le réintroduire dans le réservoir (100), sont associés au réservoir de gaz (100).

22. Méthode d'étourdissement et/ou d'abattage des animaux de boucherie au moyen d'une installation selon la revendication 14, comprenant deux compartiments en cascade séparés par un dispositif d'obturation intermédiaire et incluant les étapes suivantes :
a) introduction d'un premier groupe d'animaux dans le premier compartiment ;
b) fermeture de tous les dispositifs de fermeture ;
c) actionnement des systèmes d'extraction ;
d) au bout d'un temps T' inférieur au temps T nécessaire pour étourdir ou abattre les animaux, ouverture du dispositif d'obturation intermédiaire de manière à pouvoir transférer le premier groupe d'animaux dans le second compartiment ;
e) fermeture du dispositif d'obturation intermédiaire et ouverture de l'ouverture d'entrée ;
f) introduction d'un deuxième groupe d'animaux dans le premier compartiment et fermeture de l'ouverture d'entrée ;
g) tandis que le deuxième groupe d'animaux reste dans le premier compartiment pendant le temps T', ouverture de l'ouverture de sortie et évacuation du premier groupe d'animaux ;
h) répétition du cycle à partir de l'étape d).

23. Méthode selon la revendication 22, mise en oeuvre au moyen d'une installation selon la revendication 14, dans laquelle les systèmes d'extraction associés à chaque chambre hermétique ou chaque compartiment sont actionnés l'un après l'autre, de manière à fournir un débit d'animaux étourdis ou morts aussi continu que possible à la sortie de l'installation.

24. Méthode selon la revendication 23, dans laquelle si N représente le nombre d'animaux que la chaîne d'abattage située en aval de l'installation d'étourdissement ou d'abattage est en mesure de traiter au cours de l'unité de temps, et si T représente le temps demandé pour étourdir ou abattre les animaux, un nombre d'animaux inférieur à N*T est alors introduit dans chaque chambre hermétique ou chaque compartiment.

25. Méthode selon la revendication 22, dans laquelle, dès que le vide a été créé à l'intérieur de la chambre, et avant l'ouverture de l'ouverture d'accès, une quantité de gaz est introduite dans la chambre de manière à étourdir et/ou abattre les animaux.

26. Méthode selon la revendication 24, dans laquelle, au bout d'un laps de temps préétabli, le gaz est de nouveau extrait et renvoyé dans le réservoir (100) pour être réutilisé.
